# EUROPEAN PATENT APPLICATION

(11) **EP 2 453 460 A2**
(43) Date of publication of application: **16.05.2012**
(21) Application number: 11188398.9
(22) Date of filing: 09.11.2011
(51) Int. Cl.: H01J 9/50, H01J 9/52

(54) **A method of recycling waste fluorescent lamps**

(30) Priority: 15.11.2010 JP 2010254951
(71) Applicant: Shirai Tech, Limited, Higashi-Osaka, Osaka 577-0835 (JP); Kramy Technical Research Laboratory, Ltd., Tonami, Toyama 939-1373 (JP)
(72) Inventor: Kuramoto, Shunji, Sagamihara, Kanagawa 252-0237 (JP)
(74) Representative: Horn Kleimann Waitzhofer

(57) **Abstract**

[Subject]
A method for recycling the waste fluorescent lamp which can be peeled off the layers formed in the internal surface of the glass tube without crushing the whole of glass tube.

[Solution]
Immerse the lower edge of the waste fluorescent lamp (10) under the peeling liquid (30), and push the lower edge of the waste fluorescent lamp harder against the protrusion (34). The protrusion will penetrate the ferrule (14) in the lower edge of the waste fluorescent lamp and crush the base end section of the exhaust tube. Next, the peeling liquid will be absorbed and fulfilled inside the glass tube using the vacuum state maintained inside the glass tube. After the layers are peeled off, the protrusion tool (42) will penetrate the ferrule (14) in the upper edge of the waste fluorescent lamp and crush the base end section of the exhaust tube. And then move the waste fluorescent lamp upwards, the peeled layers will naturally be discharged with the peeling liquid from the crushed exhaust tube in the lower edge of the glass tube because an air will intake from the crushed exhaust tube in the upper edge of the glass tube.

## Description

### TECHNICAL FIELD OF THE INVENTION

This invention generally relates the recycling method of the waste fluorescent lamp, in particular, without crushing the fluorescent tube. Therefore, it can be recycled the materials without splashing the mercury.

### BACKGROUND OF THE INVENTION

The fluorescent lamp (hot cathode fluorescent tube) basically consists of the glass tube which is formed the fluorescent substance layer in its internal surface and electrodes which is attached both edges of the glass tube. Typically, a noble gas and mercury with 2 ∼ 4 hPa (*1 atmosphere ≒ 1,013 hPa) are contained in the glass tube.

About 5 -6 hundred million fluorescent lamps are disposed every year. 40% of them are 40 watt type fluorescent lamp. For 40 watt type fluorescent lamp as example, only less than 10% of them are recycled, and rest of them are disposed in the ground.

The existing recycling method of the waste fluorescent lamp is described in the disclosed patent documents below.

In the patent document 1, the wet type method that flushes the attached fluorescent substance layer and mercury from the glass chips with the cleaning liquid after the glass tube is crushed, and the dry type method that peels out the attached fluorescent substance layer and mercury from the glass chips with the brush after the glass tube is crushed are disclosed.

In the patent document 2, the another dry type method that cuts off both edges of the straight shape fluorescent tube, inserts the peeling head into the tube and then peels out the attached fluorescent substance layer and mercury from the internal fluorescent tube using the peeling head is disclosed

### PRECEDING PATENT

[Patent document 1] Patent application No. 2001-2868282
[Patent document 2] Patent application No. 62-116685

### BRIEF DESCRIPTION OF THE INVENTION

### [Object of the invention]

The existing technology which crushes the glass tube cannot be recycled the glass tube with its original form.

The existing technology which inserts the peeling head into the glass tube (cut its both edges off) can only be applied to the straight shape fluorescent lamp. It cannot be applied to the curved shape.

Also, every existing technologies such as above must be prepared the closed space for preventing the mercury splashing and the facility which has such space may be complicated. If there is any fault in this facility, it is difficult to prevent the mercury splashing in the atmosphere.

The environmental contamination by mercury concerns the health risk to the human body through the food chain via animals and seafood.

And there is the potential demand for the technology that can be recovered and recycled the waste glass tube regardless of its shape from the aspect of the efficient use of resources.

The purpose of this invention is to provide the secure recycling method for waste fluorescent lamps without splashing mercury.

The another purpose of this invention is to provide the peeling method for the formed layer inside the glass tube in the fluorescent lamp without crushing.

The other purpose of this invention is to provide the recycling method for waste fluorescent lamps regardless of its shape.

### [Means for solving the object]

The idea of this invention is gotten from the fact that the inner space of the glass tube in the fluorescent lamp is maintained as vacuum state. The negative pressure (state that the pressure is lower than the normal atmospheric pressure) is constructed inside the glass tube because of the vacuum state.

Through the use of negative pressure (vacuum), the peeling liquid is inserted and fulfilled into the glass tube. The formed layer inside the glass tube will be peeled by the liquid. And then the peeled layer will be discharged with the peeling liquid.

The "layer" in this document contains all layers such as the fluorescent substance layer formed inside the glass tube. The composition of the layer will be varied depending on the type of the fluorescent lamp. For example, the transparent conducting film layer is also included onto the rapid-start type fluorescent lamp. And the protection layer or reflection layer may be formed.

The mercury enclosed inside the glass tube is attached to the layer, therefore the mercury will also be removed from the glass tube when the layer is discharged.

The glass tube, ferrules, electrodes, lead wire and glass chip etc. can be recovered from the waste fluorescent lamp after the layers are peeled off. And the materials which consist of the layer, and the mercury can be recovered from the discharged peeling liquid.

Also, this invention can apply to not only hot cathode fluorescent lamp (HCFL) but also cold cathode fluorescent lamp (CCFL). Therefore, the definition of "fluorescent lamp" in this document includes both of the HCFL and CCFL.

### EFFECT OF THE INVENTION

According to this invention, the peeling liquid will be fulfilled into the glass tube using the vacuum status inside the glass tube in the fluorescent lamp. Only the layer formed inside the glass tube will be removed by the peeling liquid, so the resources such as the glass tube etc. can effectively be recovered and recycled without crushing the waste fluorescent lamp.

Because this invention will not crush the glass tube, the mercury in the glass tube will not be spread in the atmosphere and prevent the environmental contamination.

### BRIEF DESCRIPTION OF THE DRAWINGS

[Figure 1] 2D diagram for straight shape fluorescent lamp
[Figure 2] Cross-section diagram for detailed internal architecture of the fluorescent lamp edge
[Figure 3] Diagram for describing the recycling process of the 1st embodiment
[Figure 4] Cross-section diagram for indicating the crushing status of the exhaust tube
[Figure 5] Diagram for describing the recovering process of the glass tube
[Figure 6] Diagram for describing the recycling process of the 2nd embodiment
[Figure 7] 2D diagram for circle shape fluorescent lamp
[Figure 8] 2D diagram for circle shape fluorescent lamp which is removed the ferrules
[Figure 9] Diagram for describing the recycling process of the 3rd embodiment

### EMBODIMENT OF THE INVENTION

The embodiment of the recycling method for waste fluorescent lamp based on this invention is described below, with referring the diagrams. The recycling procedures will be described step by step. The specific facilities performed for each process can easily be prepared by the skilled person or company.

### (1st embodiment)

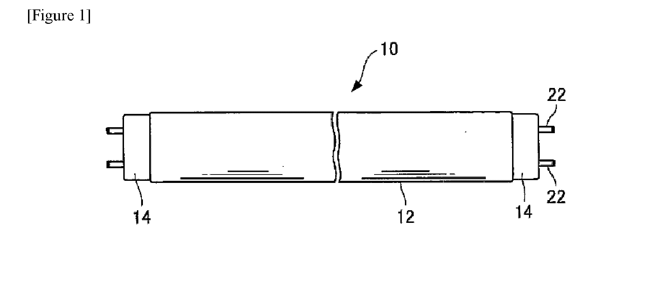

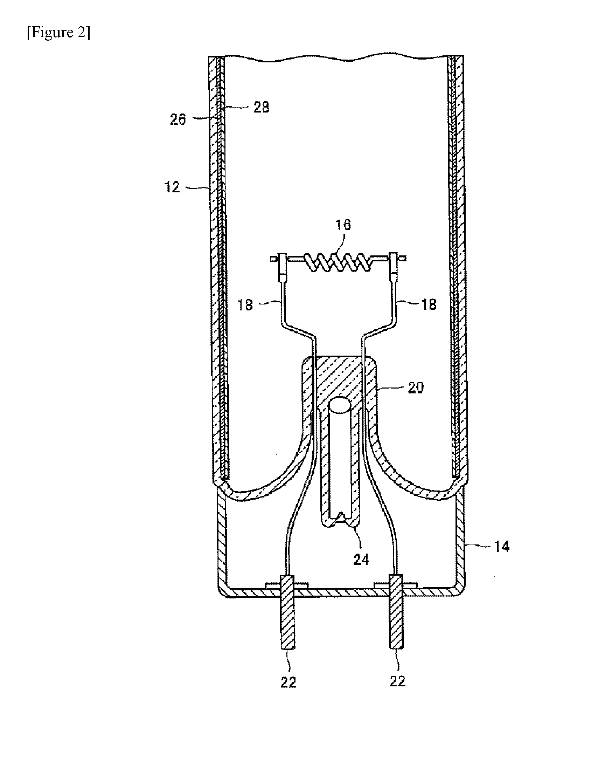

First, the architecture of the straight shape rapid-start type fluorescent lamp is briefly described as an example of the waste fluorescent lamp. The ferrules (14) are attached both edges of the glass tube (12) in the straight shape fluorescent lamp (10) as shown in Figure 1. The electrodes (16) are supported by the lead wires (18) respectively as shown in Figure 2. The lead wire is connected to the pin (22) in the ferrule (14), via stem (20).

The stem (20) has the exhaust tube (24) for vacuuming the air when the fluorescent lamp is manufactured. The exhaust tube is communicated with inside of the glass tube and the base end section of the exhaust tube is chipped off (sealed) after the glass tube had evacuated and then the noble gas and mercury (liquid mercury or mercury amalgam such as Zn-Hg, Ti-Hg) had enclosed.

Generally, the mainframe of the glass tube (12) is made from soda-lime glass and the stem (20) is made from lead glass.

The transparent conducting film layer (26) which is consists of tin oxide film is formed inside the glass tube. And the fluorescent substance layer (28) is formed onto the transparent conducting film layer. The fluorescent substance layer consists of the fluorescent substances which include the rare earth elements such as europium, yttrium and terbium etc. and phosphor powder.

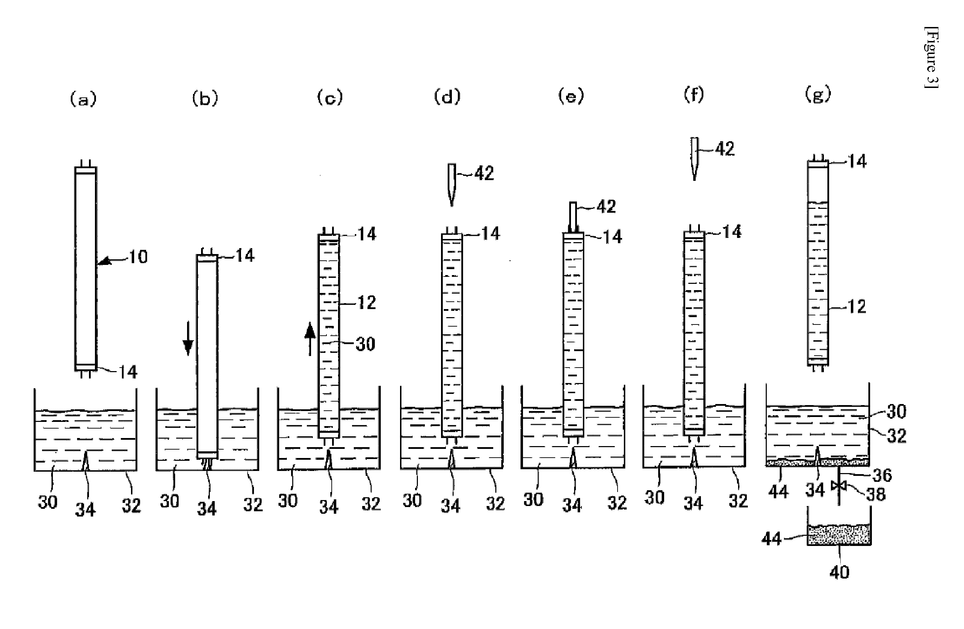

Next, the recycling method for the rapid-start type 40 watt waste fluorescent lamp above (tube diameter: 32.5mm, tube length: 1,498mm) is described, with referring Figure 3.

Prepare the tank (32) which is stored the peeling liquid (30). Hereafter, this tank is called peeling liquid tank. The protrusion (34) which has spiky edge is installed on the bottom of the peeling liquid tank (32). The duct (36) for draining the slurry settled down on the bottom of the peeling liquid tank is also installed. The valve (38) is installed on the duct. The slurry storage tank (40) is arranged onto the outlet of the duct. For the sake of simplification of the diagram, the duct (36), valve (38) and slurry storage tank (40) are only shown in Figure 3 (G).

For the peeling liquid, the solution which includes the sulfone acid, phosphoric acid, ammonium hydrogen fluoride and methyl salicylate is used (as an example).

The procedure for each process is described below:

### Process (a)

As shown in Figure 3 (a), the waste fluorescent lamp (10) is vertically held on the peeling liquid tank (32).

### Process (b)

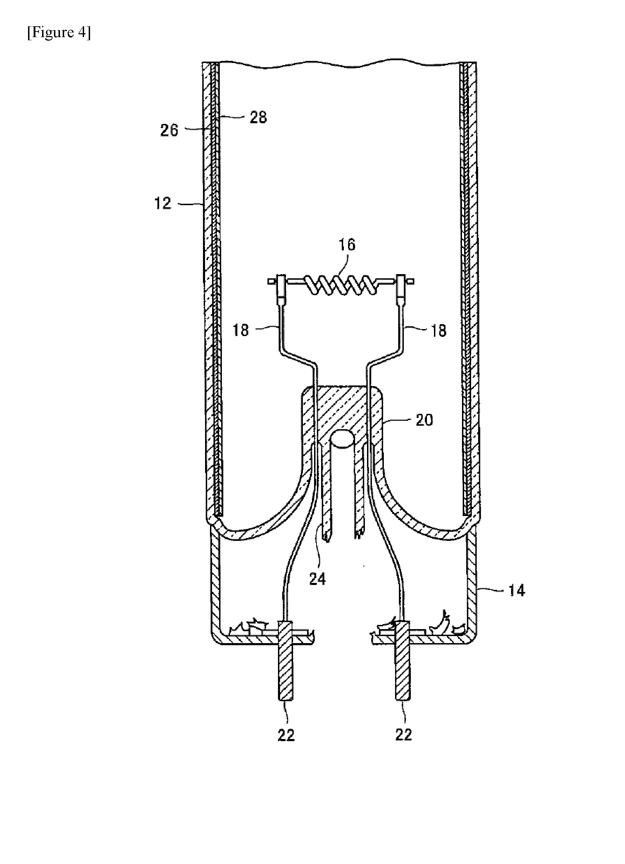

As shown in Figure 3 (b), move the waste fluorescent lamp (10) downwards and immerse the lower edge of the waste fluorescent lamp under the peeling liquid (30). And then push the lower edge of the waste fluorescent lamp harder against the protrusion (34). The protrusion will penetrate the ferrule (14) in the lower edge of the waste fluorescent lamp and crush the base end section of the exhaust tube (24). The crushed status is shown in Figure 4.

### Process (c)

As shown in Figure 3 (c), slightly move the waste fluorescent lamp upwards after the base end section of the exhaust tube is crushed to remove the ferrule (14) from the protrusion (34). The peeling liquid (30) will be absorbed and fulfilled inside the glass tube (12) via the penetration hole in the ferrule or crushed exhaust tube due to the vacuum state (negative pressure) maintained inside the glass tube.

Keep the status that the peeling liquid is fulfilled within the glass tube about 40 minutes. In this period, the transparent conducting film layer (26) and fluorescent substance layer (28) formed inside the glass tube will be peeled off.

### Process (d)

After the transparent conducting film layer and fluorescent substance layer are peeled off, as shown in Figure 3 (d), move the protrusion tool (42) which has spiky edge downwards towards the ferrule (14) in the upper edge of the waste fluorescent lamp.

### Process (e)

As shown in Figure 3 (e), the protrusion tool (42) will penetrate the ferrule (14) in the upper edge of the waste fluorescent lamp and crush the base end section of the exhaust tube (24).

### Process (f)

As shown in Figure 3 (f), move the protrusion tool (42) upwards to remove the protrusion tool from the ferrule (14). With this step, atmosphere will be communicated with inside the glass tube via the penetration hole in the ferrule or crushed exhaust tube.

### Process (g)

As shown in Figure 3 (g), move the waste fluorescent lamp (10) upwards from the peeling liquid (30). The peeled layers will naturally be discharged with the peeling liquid from the crushed exhaust tube in the lower edge of the glass tube to the peeling liquid tank (32) because an air will intake from the crushed exhaust tube in the upper edge of the glass tube.

If the speed of discharge needs to be accelerated, the forced discharge using the air pump can be available. When the forced discharge is used, connect the pump to the crushed exhaust tube in the upper edge of the glass tube (12) and intake the air.

The peeled transparent conducting film layer and fluorescent substance layer are included into the discharged peeling liquid (30). The mercury attached to the transparent conducting film layer and fluorescent substance layer will also be discharged into the peeling liquid tank with the peeling liquid. The transparent conducting film layer, fluorescent substance layer and mercury will be settled down on the bottom of the peeling liquid tank (32) as the slurry (44).

After the peeling liquid is completely discharged, the waste fluorescent lamp will be transferred to the next process.

When the process described above have been performed for a volume of waste fluorescent lamp, a large amount of slurry (44) will be accumulated onto the peeling liquid tank (32). Then, open the valve (38) to move the slurry to the slurry storage cabinet (40) through the duct (36).

For example, the materials listed below can be recovered from the slurry:

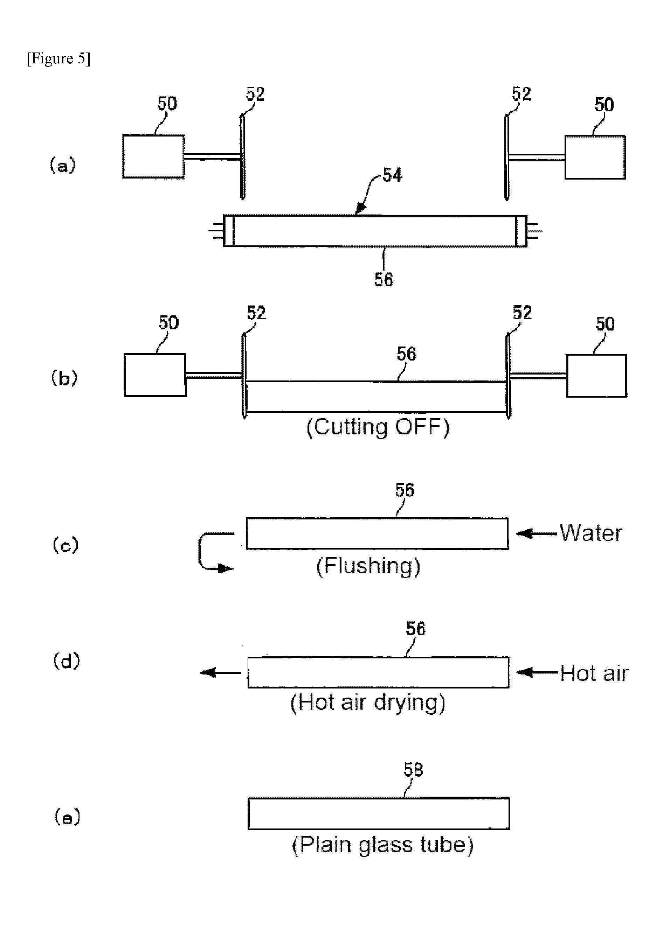

- Tin oxide (material of the transparent conducting film layer)
- Phosphor powder, rare earth (material of the fluorescent substance)
- Mercury
Also, the glass tube can be recovered from the waste fluorescent lamp after the transparent conducting film layer and fluorescent substance layer are peeled off and the process shown in the Figure 5 below is performed.

### Process (a)

As shown in Figure 5 (a), the waste fluorescent lamp which is peeled off the transparent conducting film layer and fluorescent substance layer should be allocated near the 2 units of disc cutter (52) that is rotated and driven by the motors (50) respectively.

### Process (b)

As shown in Figure 5 (b), both edges (parts include the electrode and ferrule) of the glass tube (56) in the waste fluorescent lamp (54) will be cut off by the disc cutter.

It can also be cut the perimeter of the glass tube by rotating the glass tube (56) itself.

### Process (c)

As shown in Figure 5 (c), flush the water inside the glass tube (56) which is cut off both edges to wash up.

### Process (d)

After the flushing is complete, as shown in Figure 5 (d), dry the glass tube by the hot air.

### Process (e)

As shown in Figure 5 (e), the plain glass tube (58) can be recovered after the drying process is complete.

The recovered plain glass tube can be reused as the glass tube of the recycled fluorescent lamp.

On the other hand, the materials listed below can be recovered from the edge parts cut from the waste fluorescent lamp (54):

- Aluminums (ferrule)
- Brass (ferrule pin)
- Tungsten (electrode)
- Copper (lead wire)
- Lead glass (stem)
As observed above, various materials can be recovered from the waste fluorescent lamp. For an example, the weight for each recovered material from the waste fluorescent lamp (Tube diameter: 32.5mm, Length: 1,498mm, Weight: 250g) is shown below:

| | |
|---|---|
| Plain glass tube: | 219.7g |
| Lead glass: | 18.0g |
| Aluminum: | 10.5g |
| Brass: | 0.5g |
| Tungsten: | 1.0g |
| Mercury: | 0.1g |
| Phosphor powder: | 0.1g |
| Rare earth: | 0.00075g |

For the 1st embodiment above, the recycling process has adopted for the waste fluorescent lamp with ferrules. However, this process can also be adopted for the waste fluorescent lamp which has removed its ferrules. For this case, the procedure for crushing the base ends of the exhaust tube will be easy because there is no ferrule. The crushing method can be available for any form. For example, the drill unit can be used instead of the protrusion and protrusion tool.

For the 1st embodiment above, the waste fluorescent lamp has held vertically on the peeling liquid tank and the peeling liquid has fulfilled into the inside of glass tube. However, the contents of embodiment is not limited above. It can be available for the another method that the waste fluorescent lamp is immersed under the peeling liquid tank. This method is called 2nd embodiment hereafter and described below:

### (2nd embodiment)

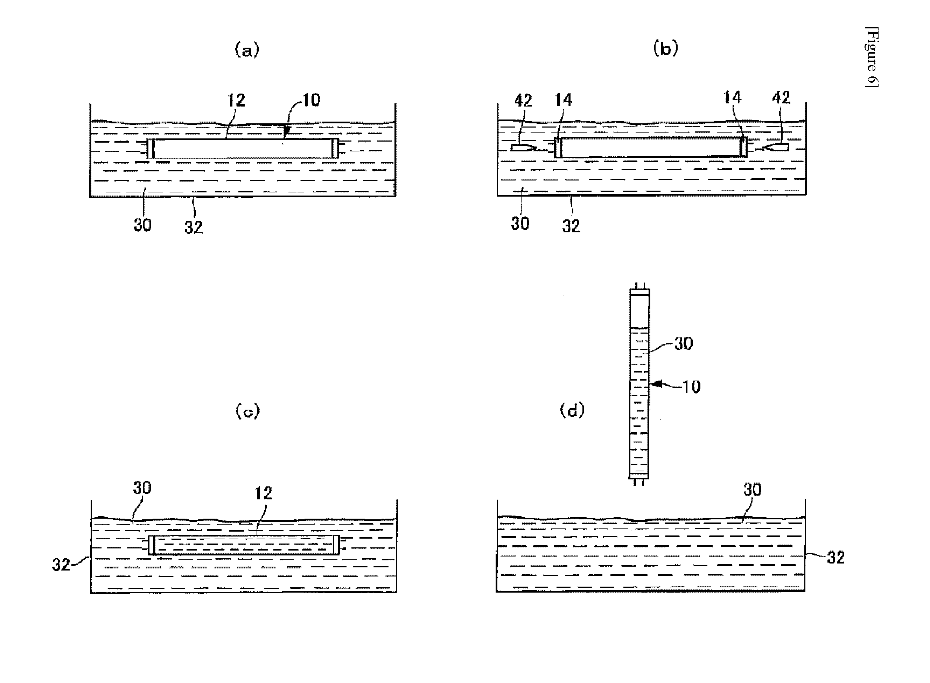

Figure 6 is for describing the recycling process procedure for the straight shape waste fluorescent lamp. For the element same as the 1st embodiment, the same number is attached. Furthermore, the description for the process same as the 1st embodiment will be omitted.

### Process (a)

As shown in Figure 6 (a), the waste fluorescent lamp (10) is horizontally held under the peeling liquid (30) in the peeling liquid tank (32).

### Process (b)

As shown in Figure 6 (b), push the protrusion tools (42) which has spiky edge harder into the ferrules (14) located both edges of the waste fluorescent lamp. The protrusion tools (42) will penetrate the ferrules (14) respectively and each base end section of the exhaust tube will be crushed.

### Process (c)

As shown in Figure 6 (c), the peeling liquid (30) will be absorbed and fulfilled inside the glass tube (12) via the penetration hole in the ferrule or crushed exhaust tube (not displayed in Figure 6 (c)).

The transparent conducting film layer and fluorescent substance layer formed inside the glass tube will be peeled off by the peeling liquid.

### Process (d)

After the transparent conducting film layer and fluorescent substance layer are peeled off, as shown in Figure 6 (d), move the waste fluorescent lamp (10) upwards from the peeling liquid (30) and then hold it vertically. The peeled layers will naturally be discharged with the peeling liquid from the crushed exhaust tube in the lower edge of the glass tube to the peeling liquid tank (32).

For the 2nd embodiment above, the recycling process for the straight shape waste fluorescent lamp. However, this embodiment can be adopted any shape fluorescent lamp such as the circle shape. Furthermore, it can be applied to the bulb-shape fluorescent lamp.

The recycling process procedure for the circle shape fluorescent lamp is described below. This is called 3rd embodiment hereafter. The description for the process same as the straight shape fluorescent lamp will be omitted.

### (3rd embodiment)

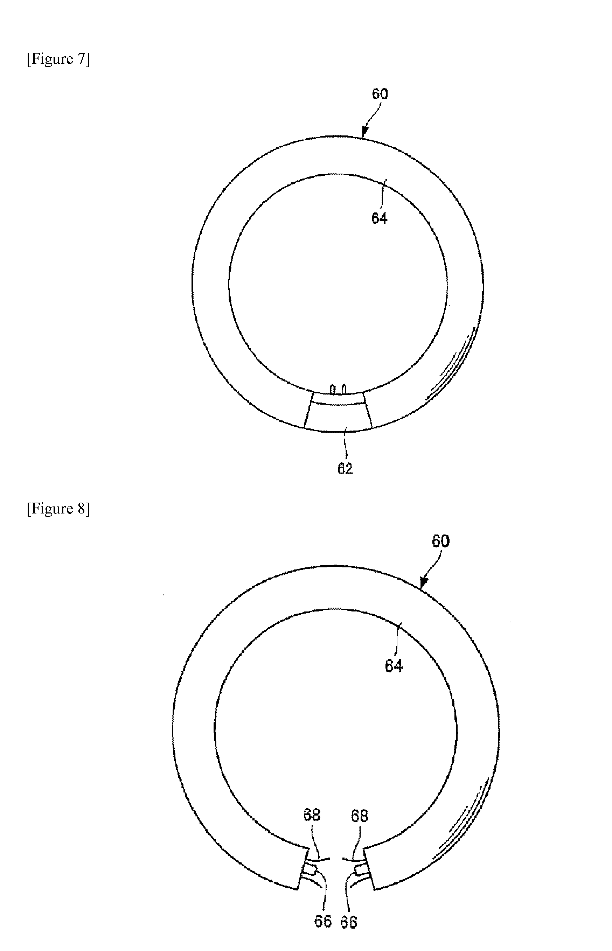

For the recycling process of the circle shape fluorescent lamp as shown in Figure 7, remove the ferrule (62) in advance and expose both edges of the glass tube (64) as shown in Figure 8. The exhaust tube (66) and lead wire (68) are exposed from each edge of the glass tube respectively.

### Process (a)

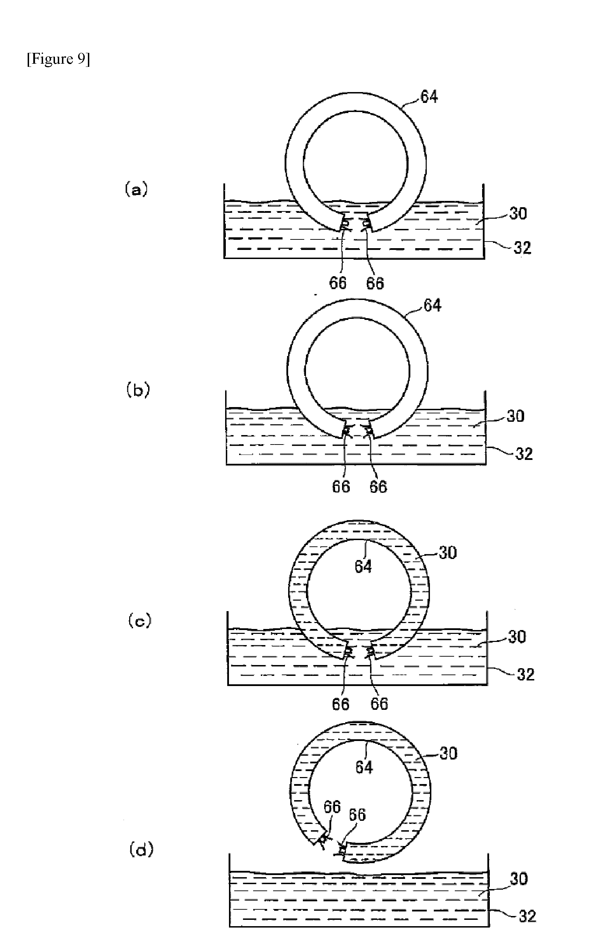

As shown in Figure 9 (a), immerse both edges of the glass tube (64) under the peeling liquid (30) in the peeling liquid tank (32).

### Process (b)

As shown in Figure 9 (b), crush the base end section of the exhaust tubes (66) located both edges of the glass tube respectively.

### Process (c)

After the base end sections of the exhaust tube are crushed, as shown in Figure 9 (c), the peeling liquid (30) will be absorbed and fulfilled into the glass tube via either or both of the crushed exhaust tubes.

### Process (d)

The transparent conducting film layer and fluorescent substance layer formed inside the glass tube will be peeled off by the peeling liquid. After that, as shown in Figure 9 (d), lift up the glass tube (64) from the peeling liquid (30). The peeled layers will naturally be discharged with the peeling liquid from the crushed exhaust tube (66) in the glass tube to the peeling liquid tank In this case, an air should be flown into the glass tube via one side of the exhaust tube and the peeling liquid should naturally be discharged from other side of the exhaust tube. In order to do that, decline the glass tube to make the vertical interval between each edge of the glass tube as shown in the Figure 9 (d) above.

When an air is input to one side of the glass tube, the peeling liquid can forcedly be discharged from other side of the glass tube.

Alternatively, the peeling liquid can also be discharged naturally both sides of the exhaust tube.

For all (1st to 3rd) embodiments described above, the method for creating hole on the glass tube is adopted the exhaust tube crushing. However, this is not the only method for creating hole. The sand blast can be used for creating hole near the stem, or the cutter can also be used for cutting off the edge of the glass tube.

All (1st to 3rd) embodiments above are described the recycling process for the waste fluorescent lamp. However, this invention is not limited to the waste fluorescent lamp. This can also be applied to the cold cathode fluorescent lamp (CCFL) which is formed the fluorescent substance layer in the internal surface, same as the fluorescent lamp.

The CCFL is typically used as the light source of the LED backlight and has the small diameter of the glass tube. Therefore, when the CCFL is recycled, it is recommended that the CCFL should be processed to immerse under the peeling liquid as described in the 2nd embodiment. In this case, it is recommended that the cutter should be used to cut off the both edges of the glass tube and creating hole.

### DESCRIPTION OF THE SIGNS

- 10: Straight shape waste fluorescent lamp
- 12: Glass tube
- 24: Exhaust tube
- 26: Transparent conducting film layer
- 28: Fluorescent substance layer
- 30: Peeling liquid
- 32: Peeling liquid tank
- 34: Protrusion
- 42: Protrusion tool
- 60: Circle shape waste fluorescent lamp
- 64: Glass tube
- 66: Exhaust tube

## Claims

1. A method for recycling a waste fluorescent lamp having a glass tube whose inside is held in a vacuum state, the recycling method including:
(a) a step of creating a hole at one end of the glass tube and filling a peeling liquid into the glass tube via the hole using the negative pressure inside the glass tube;
(b) a step of peeling off a layer formed on an inner wall of the glass tube with the peeling liquid; and
(c) a step of creating another hole at the other end of the glass tube and discharging the peeled layer and peeling liquid via the one or the other of the holes.

2. The method in accordance with claim 1 wherein the peeling liquid is drawn into the glass tube by drawing peeling liquid, which is stored in a tank, from the hole that is created at one end of the glass tube.

3. A method for recycling a waste fluorescent lamp having a glass tube whose inside is held in a vacuum state, the recycling method including:
(a) a step of creating holes at one and the other end of the glass tube and filling the peeling liquid into the glass tube via the holes created in the glass tube, using the negative pressure inside the glass tube;
(b) a step of peeling off a layer formed on an inner wall of the glass tube with the peeling liquid; and
(c) a step of discharging the peeled layer and peeling liquid via at least one of the holes.

4. The method in accordance with claim 3 wherein the peeling liquid is drawn into the glass tube by drawing peeling liquid, which is stored in a tank, from the hole or holes created at one end or both ends of the glass tube.

5. The method in accordance with claim 2 or 4 wherein the hole or holes is/are created by crushing the base end section of an exhaust tube attached to a stem at the end of the glass tube.

6. The method in accordance with claim 2 or 4 wherein the hole or holes is/are created by cutting off the end or ends of the glass tube.

7. The method in accordance with any of claim 1 to 6, further comprising:
(d) a step of recovering reusable material from the water fluorescent lamp having the peeling liquid discharged from the glass tube, and from the discharged peeling liquid.

8. The method in accordance with claim 7 wherein the step of recovering the reusable material includes cutting off both ends of the water fluorescent lamp having the peeling liquid discharged from the glass tube, to recover the glass tube.
